(19) Europäisches Patentamt / European Patent Office / Office européen des brevets

(11) **EP 2 661 779 B1**

(12) **FASCICULE DE BREVET EUROPEEN**

(45) Date de publication et mention de la délivrance du brevet:
**01.10.2014 Bulletin 2014/40**

(21) Numéro de dépôt: **12703856.0**

(22) Date de dépôt: **03.01.2012**

(51) Int Cl.:
*H01M 4/38* *(2006.01)*       *H01M 4/134* *(2010.01)*
*H01M 4/1395* *(2010.01)*     *H01M 4/133* *(2010.01)*
*H01M 4/587* *(2010.01)*      *H01M 4/1393* *(2010.01)*

(86) Numéro de dépôt international:
**PCT/FR2012/000003**

(87) Numéro de publication internationale:
**WO 2012/093224 (12.07.2012 Gazette 2012/28)**

(54) **MATÉRIAU COMPOSITE SILICIUM/CARBONE, PROCÉDÉ DE SYNTHÈSE ET UTILISATION D'UN TEL MATÉRIAU**

SILICIUM-/KOHLENSTOFFVERBUNDMATERIAL, VERFAHREN ZU SEINER SYNTHESE UND VERWENDUNG EINES DERARTIGEN MATERIALS

SILICON/CARBON COMPOSITE MATERIAL, METHOD FOR THE SYNTHESIS THEREOF AND USE OF SUCH A MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.01.2011 FR 1100058**

(43) Date de publication de la demande:
**13.11.2013 Bulletin 2013/46**

(73) Titulaires:
• **Commissariat à l'Énergie Atomique et aux Énergies Alternatives**
  **75015 Paris (FR)**
• **Renault S.A.S.**
  **92100 Boulogne-Billancourt (FR)**

(72) Inventeurs:
• **JOUANNEAU-SI LARBI, Séverine**
  **F-38590 Sillans (FR)**
• **PAGANO, Carole**
  **F-38320 Bresson (FR)**

(74) Mandataire: **Talbot, Alexandre et al**
  **Cabinet Hecké**
  **Europole**
  **10, rue d'Arménie - BP 1537**
  **38025 Grenoble Cedex 1 (FR)**

(56) Documents cités:
**US-A1- 2002 009 646     US-A1- 2005 136 330
US-A1- 2006 008 706**

EP 2 661 779 B1

**Description**

**Domaine technique de l'invention**

L'invention concerne un matériau composite silicium/carbone constitué par un agrégat de particules de silicium et de particules de carbone dans lequel les particules de silicium et les particules de carbone sont dispersées.
L'invention concerne également un procédé de synthèse et l'utilisation d'un tel matériau.

**État de la technique**

Les accumulateurs au lithium sont de plus en plus utilisés comme source d'énergie autonome, en particulier dans les équipements portables. Cette tendance s'explique par l'amélioration continue des performances des accumulateurs au lithium, notamment des densités d'énergie massique et volumique nettement supérieures à celles des accumulateurs classiques nickel-cadmium (Ni-Cd) et nickel-hydrure métallique (Ni-MH).
Les matériaux à base de carbone, en particulier de graphite ont été développés avec succès et largement commercialisés comme matériaux électrochimiquement actifs d'électrode, en particulier, pour les accumulateurs au lithium. Ces matériaux sont particulièrement performants du fait de leur structure lamellaire propice à l'intercalation et la desintercalation du lithium et de leur stabilité au cours des différents cycles de charge et de décharge. Toutefois, la capacité spécifique théorique du graphique (372mA/g) reste largement inférieure à celle du lithium métallique (4 000 mA/g).
Certains métaux susceptibles d'incorporer le lithium se sont révélés être des alternatives prometteuses au carbone. En particulier, avec une capacité théorique estimée à 3578 mAh/g (pour $Si \rightarrow Li_{3,75}Si$), le silicium représente une alternative intéressante au carbone. Néanmoins, à l'heure actuelle, une exploitation viable des électrodes à base de silicium n'est pas envisageable car les d'accumulateurs au lithium contenant de telles électrodes présentent des problèmes d'intégrité inhérents à la présence de silicium. En effet, lors de la charge, les ions lithium sont impliqués dans la formation d'une couche passivante protectrice et dans la formation d'un alliage $Li_5Si_4$ avec le silicium par réaction électrochimique. La formation de l'alliage s'accompagne d'une augmentation volumique de l'électrode pouvant atteindre jusqu'à 300%. Cette forte expansion volumique est suivie d'une contraction lors de la décharge due à la désinsertion du lithium de l'électrode. Ainsi, l'expansion volumique des particules de silicium en cours de charge de l'accumulateur entraîne une perte d'intégrité de l'électrode conduisant à la fois à une perte de percolation électronique mais aussi à une perte de lithium associée à la formation d'une couche passivante sur les nouvelles surfaces créées. Ces deux phénomènes induisent une perte importante de la capacité irréversible en cyclage de l'accumulateur.
Récemment, des composites silicium/carbone dans lesquels le silicium est dispersé dans une matrice carbonée ont été proposés. Ce matériau actif pour électrode d'accumulateur au lithium permettrait de maintenir l'intégrité de l'électrode après plusieurs cycles de charge-décharge.
Plusieurs procédés de fabrication de tels composites silicium/carbone ont été proposés dans la littérature, en particulier, des procédés mettant en oeuvre des techniques de broyage énergétique et/ou de dépôt chimique en phase vapeur (CVD).
À titre d'exemple, le document EP-A-1205989 décrit un procédé de fabrication d'un matériau composite silicium/carbone ayant une double structure consistant en un noyau poreux dont la surface externe est recouverte d'une couche de revêtement. Le procédé comporte une première étape de formation d'un noyau silicium/carbone par broyage d'une poudre contenant des particules de silicium et des particules d'un type de carbone puis granulation et, une seconde étape de revêtement du noyau silicium/carbone par une couche de carbone. Le revêtement est obtenu par dépôt CVD à partir d'un composé organique source de carbone à la surface du noyau silicium/carbone suivi d'une carbonisation entre 900 et 1200°C. Le carbone formant le noyau silicium/carbone est choisi parmi les carbones ayant une résistivité inférieure ou égale à 1,0 Ω.cm, par exemple, le noir de carbone, l'acétylène black, les graphites, la coke ou le charbon de bois. Le pourcentage de silicium dans le noyau silicium/carbone est compris entre 10% et 90% en poids, de préférence entre 40 et 90%.
Le document CN-A-1913200 propose également un matériau composite silicium/carbone pour électrode, formé par un noyau sphérique dont la surface externe est recouverte par un revêtement à base de carbones. Le noyau est obtenu à partir d'un mélange comportant entre 1 et 50% en poids de particules de silicium et entre 50 et 99% en poids d'un graphite ou d'un mélange de graphites. Le revêtement représente de 1 à 25% en poids du matériau composite silicium/carbone et comprend entre 0,5 et 20% d'un carbone pyrolytique et entre 0,5 à 5% d'un carbone électroniquement conducteur. Contrairement au document EP-A-1205989, le noyau silicium/carbone du matériau composite silicium/carbone est réalisé par simple mélange de poudres de silicium et des graphites, sans broyage. Le noyau silicium/carbone est ensuite lié à un composé organique source de carbone par une seconde étape où le noyau silicium/carbone et le composé organique sont mélangés et broyés simultanément puis séchés. Le noyau silicium/carbone revêtu du revêtement à base de carbones est obtenu par carbonisation à une température comprise entre 450°C et 1500°C, pour former un revêtement de carbone pyrolytique puis mélange du carbone conducteur électronique, pour incorporer le carbone conducteur électronique dans ledit revêtement.

Les procédés décrits dans la littérature restent néanmoins difficiles à mettre en oeuvre et coûteux, pour des performances et une tenue mécanique des matériaux actifs encore insuffisantes pour pouvoir envisager une exploitation viable.

### Objet de l'invention

L'invention a pour but un matériau composite silicium/carbone qui remédie au moins en partie aux inconvénients de l'art antérieur.

En particulier, l'invention a pour but un matériau composite silicium/carbone ayant une conductivité électrique élevée. Plus particulièrement, l'invention a pour objet un matériau composite silicium/carbone ayant des performances électrochimiques améliorées.

L'invention a également pour but un procédé de synthèse d'un tel matériau composite facile à mettre en oeuvre et peu coûteux.

Selon l'invention, ce but est atteint par le fait que les particules de carbone sont constituées par au moins trois types de carbone différents, un premier type de carbone étant choisi parmi les graphites sphériques non-poreux, un second type de carbone étant choisi parmi les graphites non-sphériques et un troisième type de carbone étant choisi parmi les carbones conducteurs électroniques poreux, par le fait que les premier et second types de carbone ont chacun une taille moyenne de particules comprise entre $0,1\mu m$ et $100\mu m$ et par le fait que le troisième type de carbone a une taille moyenne de particules inférieure ou égale à 100nm.

Selon un développement de l'invention, les particules de carbone sont constituées par des particules de graphite sous forme de microbilles, de graphite sous forme lamellaire et de noir de carbone, avec un rapport massique de 1/3 : 1/3 : 1/3.

Un tel matériau composite silicium/carbone est avantageusement utilisé comme matériau électrochimiquement actif d'une électrode, de préférence, d'une électrode d'un accumulateur au lithium.

### Description sommaire des dessins

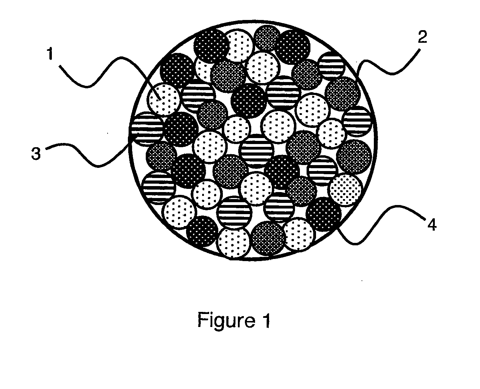

D'autres avantages et caractéristiques ressortiront plus clairement de la description qui va suivre de modes particuliers de réalisation de l'invention donnés à titre d'exemples non limitatifs et représentés par le dessin unique annexé, dans lequel la figure 1 représente, schématiquement et en coupe, un matériau composite silicium/carbone selon un mode de réalisation particulier de l'invention.

### Description de modes particuliers de réalisation

Selon un mode de réalisation particulier représenté à la figure 1, un matériau composite silicium/carbone est constitué par un agrégat de particules de silicium 1 et de particules de carbone. On entend par matériau composite un matériau solide hétérogène obtenu en associant au moins deux phases dont les qualités respectives se complètent pour former un matériau aux performances globales améliorées. On entend par agrégat un assemblage de particules qui sont fortement et intimement liées entre-elles de manière à former une unité très stable.

Le matériau composite silicium/carbone comprend avantageusement entre 10% et 50% en masse de particules de silicium 1 et entre 50% et 90% en masse de particules de carbone, la somme des pourcentages massiques des particules de silicium et des particules de carbone étant égal à 100%. À l'exception d'éventuelles impuretés, le matériau composite silicium/carbone est, par conséquent, constitué uniquement de carbone et de silicium.

Comme représenté à la figure 1, les particules de silicium 1 et les particules de carbone sont dispersées dans l'agrégat, avantageusement, de manière homogène, pour que chaque particule de silicium 1 soit recouverte au moins en partie de particules de carbone ou, avantageusement, entourées par des particules de carbone. Les particules de silicium 1 sont réparties parmi les particules de carbone de sorte que les particules de carbone constituent, de préférence, une matrice pour les particules de silicium 1.

Les particules de silicium 1 ont, avantageusement, une taille nanométrique. Les particules de silicium 1 ont, de préférence, une taille moyenne de particules inférieure ou égale à 1 $\mu m$. Avantageusement, les particules de silicium 1 sont majoritairement de forme sphérique. Néanmoins, des particules de type plaquette sont aussi envisageables.

Les particules de carbone sont constituées par au moins trois types de carbone différents. On entend par "types de carbone différents" des carbones qui diffèrent par leur structure allotropique, leur forme et/ou leur taille de particules. Les particules de carbone sont constituées par au moins des premier, second et troisième types de carbone, respectivement 2, 3 et 4, différents et complémentaires, afin de créer une matrice carbonée favorisant la percolation et la diffusion électronique au sein du matériau composite silicium/carbone.

Le premier type de carbone 2 est choisi parmi les graphites sphériques non-poreux. Le premier type de carbone 2 est, de préférence, un graphite sous forme de microbilles, par exemple le MCMB (en anglais "Meso-carbon microbeads"). Le premier type de carbone 2 a, avantageusement, une surface spécifique comprise entre $0,1m^2/g$ et $3m^2/g$.

Le second type de carbone 3 est choisi parmi les graphites non-sphériques. Le second type de carbone 3 est, de préférence, un graphite sous forme lamellaire. Le second type de carbone 3 a une surface spécifique comprise entre $5m^2/g$ et $20m^2/g$.

Les premier et second types de carbone, respectivement 2 et 3, sont des carbones submicrométriques à micrométriques. Les premier et second types de carbone, respectivement 2 et 3, ont chacun une taille moyenne de particules comprise entre $0,1\,\mu m$ et $10\mu m$.

Le troisième type de carbone 4 est choisi parmi les carbones conducteurs électroniques poreux. Le troisième type de carbone 4 est un carbone nanométrique ayant une taille moyenne de particules inférieure ou égale à 100nm. Le troisième type de carbone 4 a, avantageusement, une surface spécifique supérieure ou égale à $50m^2/g$. Le troisième type de carbone 4 est, de préférence, un noir de carbone, par exemple, le noir de carbone Super P™.

Le pourcentage massique de chaque type de carbone est compris entre 5% et 90%, de préférence entre 10% et 80%, par rapport à la masse totale des particules de carbone dans le matériau composite silicium/carbone. Selon un mode de réalisation particulier, les pourcentages massiques respectifs des différents types de carbone dans le matériau composite silicium/carbone peuvent, avantageusement, être identiques.

Selon un mode de réalisation préférentiel, les particules de carbone sont constituées uniquement des premier, second et troisième types de carbone, respectivement 2, 3 et 4. Les particules de carbone peuvent, par exemple, être constituées par des particules de graphite 2 sous forme de microbilles, de graphite 3 sous forme lamellaire et de noir de carbone 4, avec un rapport massique de 1/3 : 1/3 : 1/3.

Le matériau composite silicium/carbone décrit ci-dessus peut être directement obtenu par un procédé de synthèse décrit ci-après faisant intervenir uniquement des étapes élémentaires classiques et simples à mettre en oeuvre.

Selon un premier mode de réalisation particulier, un procédé de synthèse du matériau composite silicium/carbone décrit ci-dessus est constitué uniquement par le broyage mécanique d'un mélange de particules de silicium et de particules de carbone, initialement sous forme de poudres.

De manière avantageuse, le broyage est réalisé dans un solvant liquide et l'étape de broyage est suivie d'une étape de séchage de manière à éliminer le solvant liquide.

Les particules de silicium de départ se présentent sous la forme d'une poudre de fines particules, avantageusement, de taille nanométrique. Les particules de silicium ont, de préférence, une taille moyenne de particules inférieure ou égale à $1\mu m$.

Les particules de carbone de départ se présentent sous la forme d'une poudre de fines particules constituées par au moins des premier, second et troisième types de carbone ayant chacun une structure allotropique, une forme et/ou une taille de particules différentes.

Le premier type de carbone est choisi parmi les graphites sphériques non-poreux. Le premier type de carbone est, de préférence, un graphite sous forme de microbilles, par exemple le MCMB. Le premier type de carbone a, avantageusement, une surface spécifique comprise entre $0,1m^2/g$ et $3m^2/g$. Le second type de carbone est choisi parmi les graphites non-sphériques. Le second type de carbone est, de préférence, un graphite sous forme lamellaire. Le second type de carbone a une surface spécifique comprise entre $5m^2/g$ et $20m^2/g$.

Les premier et second types de carbone sont des carbones submicrométriques à micrométriques. Les premier et second types de carbone ont une taille moyenne de particules comprise entre $0,1\mu m$ et $100\mu m$.

Le troisième type de carbone est choisi parmi les carbones poreux nanométriques, conducteurs électroniques, ayant une taille moyenne de particules inférieure ou égale à 100nm. Le troisième type de carbone a, avantageusement, une surface spécifique supérieure ou égale à $50m^2/g$. Le troisième type de carbone est, de préférence, un noir de carbone, par exemple, le noir de carbone Super P™.

Les particules de silicium et les particules de carbone de départ peuvent présenter des impuretés dans des proportions pouvant aller jusqu'à 5%, de préférence, inférieure à 2%. Néanmoins, la teneur massique en silicium ou en carbone, respectivement, des particules de silicium ou des particules de carbone, doit rester élevée pour maintenir les performances électrochimiques du matériau composite silicium/carbone. De même, la nature des impuretés ne doit pas altérer les propriétés mécaniques et/ou électrochimiques du matériau composite silicium/carbone.

Les particules de silicium de départ et les différents types de carbone de départ peuvent être introduits, simultanément ou séparément, lors de l'étape de broyage, sous forme d'une ou plusieurs charges successives introduites dans un broyeur.

Le pourcentage massique de chaque type de carbone introduit au cours du broyage est, avantageusement, compris entre 5% et 90%, de préférence entre 10% et 80%, par rapport à la masse totale des particules de carbone dans le mélange initial de poudres.

Les pourcentages massiques respectifs des différents types de carbone dans le mélange initial de poudres peuvent, avantageusement, être identiques. Les particules de carbone sont, de préférence, constituées uniquement par les premier, second et troisième types de carbone.

L'étape de broyage est réalisée, par exemple, en introduisant dans le broyeur un mélange initial de poudres des particules de silicium et des particules de carbone, en ajoutant le solvant liquide pour former une suspension, en broyant cette dernière et en évaporant le solvant liquide pour obtenir le matériau composite silicium/carbone. Alternativement, un broyage à sec est également possible.

Le mélange initial de poudres comprend, de préférence, entre 10% et 50% en masse des particules de silicium et entre 50% et 90% en masse des particules de carbone, la somme des pourcentages massiques des particules de silicium et des particules de carbone étant égal à 100%.

À titre d'exemple, les particules de carbone sont constituées par le mélange d'un graphite sous forme de microbilles ayant une surface spécifique comprise entre $0,1m^2/g$ et $3m^2/g$, d'un graphite sous forme lamellaire ayant une surface spécifique comprise entre $5m^2/g$ et $20m^2/g$ et d'un noir de carbone ayant une surface spécifique supérieure ou égale à $50m^2/g$. Le rapport massique de chaque type de carbone représente un tiers de la masse totale des particules de carbone introduites lors de l'étape de broyage.

Le solvant liquide est choisi de manière à être inerte vis-à-vis des particules de silicium et des particules de carbone. Le solvant liquide est choisi, avantageusement, parmi les alcanes, de préférence les alcanes aromatiques comme l'hexane. La présence d'un solvant liquide améliore l'homogénéité du mélange et contribue à l'obtention d'un matériau composite silicium/carbone, sans agglomérats, dans lequel les particules de silicium et les particules des différents types de carbone sont dispersées.

Après l'étape de broyage mécanique, le solvant liquide est éliminé classiquement par séchage. On obtient le matériau composite silicium/carbone décrit précédemment après évaporation du solvant liquide selon tout procédé connu, par exemple, par séchage dans une étuve à une température de 55°C durant 12heures à 24 heures.

Des traces de solvant liquide peuvent rester dans le matériau composite silicium/carbone ainsi obtenu après séchage. Néanmoins, le reliquat de solvant liquide n'est pas significatif et ne dépasse pas 1% en masse par rapport à la masse totale du matériau composite silicium/carbone.

Selon un second mode de réalisation particulier, un procédé de synthèse est identique au procédé de synthèse selon le premier mode de réalisation à l'exception du fait qu'il comporte une étape additionnelle de post-traitement thermique du matériau composite silicium/carbone est effectuée après l'étape de broyage mécanique de manière à consolider le matériau composite silicium/carbone. Le post-traitement renforce la cohésion des particules de silicium et des particules de carbone entre-elles au sein du matériau composite silicium/carbone.

Le procédé de synthèse est, avantageusement, constitué uniquement par les étapes successives suivantes :

- formation du matériau composite silicium/carbone par broyage mécanique dans le solvant liquide décrit précédemment, du mélange des particules de silicium et des particules de carbone décrit ci-dessus, initialement sous forme de poudre,
- séchage de manière à éliminer le solvant liquide et,
- post-traitement thermique à une température comprise entre 600°C et 1100°C, de préférence à 1000°C, pendant une courte durée n'excédant pas 4h, de préférence, comprise entre 15min et 4h.

Le post-traitement thermique est, de préférence, réalisé sous atmosphère contrôlée ou réducteur, par exemple, sous atmosphère d'argon ou d'hydrogène.

Les procédés de synthèse selon les premier et second modes de réalisation décrits précédemment sont particulièrement avantageux par rapport à ceux de l'art antérieur car ils permettent l'obtention d'un matériau composite silicium/carbone ayant des propriétés électrochimiques améliorées, en un nombre limité d'étapes et sans requérir au recouvrement du matériau composite par un revêtement carboné. Les étapes du procédé sont classiques, reproductibles et simples à mettre en oeuvre. Ainsi, le procédé selon l'invention permet d'éviter l'étape d'enrobage présente dans les procédés de l'art antérieur tout en permettant de parfaire le système de percolation électronique au sein du matériau composite silicium/carbone.

Le matériau composite conducteur silicium/carbone décrit ci-dessus est particulièrement adapté à une utilisation comme matériau électrochimiquement actif d'une électrode. On entend par matériau électrochimiquement actif d'une électrode, un matériau participant aux réactions électrochimiques mises en jeu au sein de l'électrode.

Le matériau composite silicium/carbone peut être utilisé comme matériau électrochimiquement actif d'un système électrochimique à électrolyte non-aqueux, voire aqueux.

Le matériau composite silicium/carbone est, avantageusement, adapté à une utilisation comme matériau électrochimiquement actif d'une électrode d'un accumulateur au lithium.

Une électrode peut être composé d'une dispersion formée, selon tout procédé connu, par le matériau composite silicium/carbone décrit ci-dessus et un additif conducteur, par exemple, un carbone conducteur.

Alternativement, une électrode peut être composée d'une dispersion formée, selon tout procédé connu, par le matériau composite silicium/carbone décrit ci-dessus et un liant destiné à assurer la cohésion mécanique, une fois le solvant évaporé.

Le liant est, classiquement, un liant polymère choisi parmi les polyesters, les polyéthers, les dérivés polymère de méthylméthacrylate, d'acrylonitrile, la carboxyle méthyle cellulose et ses dérivées, les latex de type styrène butadiène et leurs dérivés, les polyvinyles acétates ou polyacrylique acétate et les polymères de fluorure de vinylidène, par exemple, le difluorure de polyvinylidène (noté PVdF).

Selon un mode de réalisation particulier, une batterie comporte au moins une électrode négative contenant le matériau composite silicium/carbone décrit ci-dessus et une électrode positive source d'ion lithium. La batterie comporte, avantageusement, un électrolyte non-aqueux.

De façon connue, l'électrolyte non-aqueux peut, par exemple, être constitué d'un sel de lithium comportant au moins un cation Li⁺, choisi parmi :

- du lithium bis[(trifluorométhyl)sulfonyl]imide (LiN(CF$_3$SO$_2$)$_2$), du lithium trifluorométhane sulfonate (LiCF$_3$SO$_3$), lithium bis(oxalato)borate (LiBOB), du lithium bis(perfluoroéthylsulfonyl)imide (LiN(CF$_3$CF$_2$SO$_2$)$_2$),
- des composés de formule LiClO$_4$, LiAsF$_6$, LiPF$_e$, LiBF$_4$, LiI, LiCH$_3$SO$_3$ ou LiB(C$_2$O$_4$)$_2$ et,
- des composés fluorés de formule LiR$_F$SO$_3$R$_F$, LiN(R$_F$SO$_2$)$_2$ ou LiC(R$_F$SO$_2$)$_3$ où R$_F$ est un groupement choisi parmi un atome de fluor et un groupement perfluoroalkyle comportant entre un et huit atomes de carbone.

Le sel de lithium est, de préférence, dissout dans un solvant ou un mélange de solvants polaires aprotiques, par exemple, choisis parmi l'éthylène carbonate (noté "EC"), le propylène carbonate, le diméthylcarbonate, le diéthylcarbonate (noté "DEC"), le méthyléthylcarbonate.

**EXEMPLES**

Caractéristiques des carbones de départ

Carbone

- Premier type de carbone : graphite MCMB 2528 (en anglais "Meso-carbon microbeads"), sphérique non-poreux, commercialisé par Showa Denko.
- Second type de carbone : graphite SFG15, non-sphérique, sous forme de paillettes, commercialisé par la société Timcal.
- Troisième type de carbone : carbone de type Super P™ commercialisé par la société Timcal.

Les caractéristiques des premier, second et troisième types de carbone ainsi que celles du silicium sont répertoriées dans le tableau 1 ci-dessous.

**Tableau 1**

|  | Silicium | Carbone MCMB | Carbone SFG15 | Carbone Super P™ |
|---|---|---|---|---|
| Forme des particules | sphères | sphères | paillettes | poreux |
| Surface spécifique (BET) (m²/g) | 80 | 2 | 9.5 | 60 |
| Taille moyenne des particules | 100 nm | 25 μm | 15 μm | 40 nm |
| Capacité réversible pratique attendue (mAh/g) | 3600 mAh/g | 320 mAh/g | 360 mAh/g | 70 Ah/g |

Deux matériaux composites silicium/carbone, 1-Si/3C et 2-Si/3C, comportant trois types de carbone différents ont été synthétisés selon un même procédé de synthèse et dans des conditions strictement identiques.

Par ailleurs, trois autres matériaux composites silicium/carbone comportant moins de trois types de carbone différents ont été réalisés, à titre comparatif, selon un mode opératoire et dans des conditions de synthèse identiques aux matériaux composites silicium/carbone 1-Si/3C et 2-Si/3C. Les matériaux composites silicium/carbone 3-Si/2C et 4-Si/2C comportent uniquement deux types de carbone différents et le matériau composite silicium/carbone 5-Si/1C comporte uniquement un type de carbone.

**Exemple 1**

*Synthèse du matériau composite silicium/carbone* 1-Si/3C

Le matériau composite 1-Si/3C est obtenu par broyage mécanique dans un broyeur à bille Marque de la société Retsch (diamètre 8 mm), d'un mélange de 1,80 g de silicium et 4,20 g de particules de carbone (rapport massique Si/C de 30/70) dans 150mL d'hexane. 4,20 g de particules de carbone correspondent à un mélange de 1,40g de poudre du graphite sphérique MCMB 2528, 1,40g de poudre du graphite lamellaire SFG15 et 1,40g de poudre du carbone conducteur électronique Super P™ (rapport massique 1/3 : 1/3 : 1/3). Après séchage à 20°C durant 240min, on obtient 6g du matériau composite silicium/carbone 1-Si/3C. On traite thermiquement le matériau composite 1-Si/3C, sous flux d'argon, à une température de 1000°C durant 4 heures.

**Exemple 2**

*Synthèse du matériau composite silicium/carbone 2-Si/3C*

Le matériau composite 2-Si/3C est obtenu selon le même mode opératoire que dans l'exemple 1, à l'exception des rapports massiques respectivement des trois types de carbone. 8,40g de particules de carbone sont obtenus par mélange de 6,72g de poudre du graphite sphérique MCMB 2528, 0,84g de poudre du graphite lamellaire SFG15 et 0,84g de poudre du carbone conducteur électronique Super P™ (rapport massique de 80 : 10 : 10).

**Exemple 3**

*Synthèse du matériau composite silicium/carbone 3-Si/2C*

Le matériau composite 3-Si/2C est obtenu selon le même mode opératoire que dans l'exemple 1, à l'exception du fait que l'on utilise uniquement deux types de carbone. 8,40g de particules de carbone sont constitués par un mélange de 6,72g de poudre du graphite sphérique MCMB 2528 et 1,68g de poudre du graphite lamellaire SFG15 (rapport massique de 80 : 20).

**Exemple 4**

*Synthèse du matériau composite silicium/carbone 4-Si/2C*

Le matériau composite 4-Si/2C est obtenu selon le même mode opératoire que dans l'exemple 1, à l'exception du fait que l'on utilise uniquement deux types de carbone. 8,41g de particules de carbone sont constitués par un mélange 6,72g de poudre du graphite sphérique MCMB 2528 et 1,69g de poudre du carbone conducteur électronique Super P™ (rapport massique de 80 : 20).

**Exemple 5**

*Synthèse du matériau composée silicium/carbone 5-Si/C*

Le matériau composite 5-Si/C est obtenu selon le même mode opératoire que dans l'exemple 1, à l'exception du fait que l'on utilise uniquement un seul type de carbone. 8,40g de particules de carbone sont constitués par 8,40g de poudre du graphite sphérique MCMB 2528.

**Mesure des performances électrochimiques**

Cinq accumulateurs au lithium de type "pile bouton" ont été réalisés à partir des matériaux composites silicium/carbone des exemples 1 à 5 dans des conditions de synthèse strictement identiques puis testés pour comparer leur performance électrochimique.

Préparation d'un accumulateur au lithium de type "pile bouton"

L'accumulateur au lithium de type "pile bouton" est classiquement réalisé à partir d'une électrode négative au lithium, d'une électrode positive à base du matériau composite silicium/carbone et d'un séparateur de type Celgard en polymère.

L'électrode négative est formée par un film circulaire de 14mm de diamètre et 100μm d'épaisseur, déposé sur un disque d'inox servant de collecteur de courant. Le séparateur est imbibé par un électrolyte liquide à base de LiPF6 à une concentration de 1mol/l dans un mélange EC/ DEC en volume de solvant 1/1.

L'électrode positive est formée à partir du matériau composite silicium/carbone. On obtient une encre en mélangeant 80% en masse du matériau composite silicium/carbone, 10% en masse de carbone et 10% en masse de difluorure de polyvinylidène (PVdF) constituant le liant, les pourcentages massiques étant calculés par rapport au poids total de l'encre obtenue. L'encre est ensuite déposée sur un feuillard en aluminium de 20μm d'épaisseur constituant le collecteur de courant, sous une racle à 100 μm d'épaisseur puis séchée à 80°C durant 24h. Le film obtenu est pressé sous une pression de 10T puis découpé sous forme d'un disque de 14mm de diamètre, pour former l'électrode positive de l'accumulateur au lithium de type "pile bouton.

Test des accumulateurs au lithium de type "pile bouton"

Les cinq accumulateurs au lithium de type "pile bouton ont été testés à une température de 20°C, en mode intentiostatique à régime de C/10 entre un potentiel de 1,5V et 3V vs. Li$^+$/Li.

Pour chaque accumulateur au lithium de type "pile bouton", la capacité réversible pratique restituée en décharge $Q_p$ est mesurée et comparée à la capacité réversible pratique calculée $Q_c$. La capacité réversible pratique restituée en décharge $Q_p$ est mesurée avec une marge d'erreur de $\pm$ 1%.

La capacité réversible pratique $Q_p$ du matériau composite silicium/carbone est calculée à partir de l'équation (1) décrite ci-dessous, à partir des capacités réversibles pratiques attendues $Q_{att}^{Si}$ et $Q_{att}^{Ci}$, respectivement, du silicium et des différents types de carbone et, de leur pourcentage massique respectif dans le matériau composite silicium/carbone.

$$Q_c = \%Si * Q_{att}^{Si} + \sum \%C_i * Q_{att}^{Ci} \qquad (1)$$

dans laquelle Ci correspond à un type de carbone et,
$Q_{att}^{Si}$ et $Q_{att}^{Ci}$ les capacités réversibles pratiques attendues, respectivement, du silicium et du type de carbone Ci considéré.

Le tableau 2 suivant répertorie les résultats obtenus à partir des accumulateurs au lithium de type "pile bouton" comportant une électrode réalisée à partir les matériaux composites silicium/carbone des exemples 1 à 5.

**Tableau 2**

| N°ex. | Réf. | $m_{Si}/(\sum m_{Ci}+m_{Si})$ (%) | $m_{MCMB}/\sum m_{Ci}$ (%) | $M_{SFG15}/\sum m_{Ci}$ (%) | $m_{SuperP}/\sum m_{Ci}$ (%) | $Q_c$ (mAh/g) | $Q_p$ (mAh/g) | $Q_p/Q_c$ |
|---|---|---|---|---|---|---|---|---|
| 1 | 1-Si/3C | 30/70 | 33,33 | 33,33 | 33,33 | 1253 | 1250 | 0,99 |
| 2 | 2-Si/3C | 30/70 | 80 | 10 | 10 | 1289 | 1175 | 0,91 |
| 3 | 3-Si/2C | 30/70 | 80 | 20 | 0 | 1309 | 1060 | 0,81 |
| 4 | 4-Si/2C | 30/70 | 80 | 0 | 20 | 1269 | 1100 | 0,87 |
| 5 | 5-Si/C | 30/70 | 100 | 0 | 0 | 1304 | 1150 | 0,88 |

On peut classer les accumulateurs au lithium de type "pile bouton" en fonction des valeurs de $Q_p$ obtenues. On obtient le classement suivant des exemples :

1 > 2 > 5 > 4 > 3

En comparant les résultats de capacités réversibles pratiques relativement aux capacités réversibles pratiques calculées c'est-à-dire en fonction du rapport $Q_p/Q_c$, on obtient le même classement.

Ainsi, les résultats obtenus mettent en exergue les performances améliorées des accumulateurs au lithium de type "pile bouton ayant une électrode positive formée avec les matériaux composites silicium/carbone 1-Si/3C et 2-Si/3C.

Les résultats sont d'autant plus inattendus qu'avec une capacité réversible pratique attendue $Q_{att}^{CSuperP}$ peu élevée de 70 mAh/g, le noir de carbone Super P constituant le troisième type de carbone est supposé insérer peu de capacité. On s'attendrait, par conséquent, à observer une baisse de la capacité réversible pratique $Q_p$ pour les exemples 1 et 2. Or, de façon surprenante, l'association d'au moins trois types de carbone différents a pour effet d'améliorer les performances électrochimiques du matériau composite silicium/carbone.

De même, la comparaison des résultats obtenus aux exemples 2 et 3 montre que l'ajout uniquement du noir de carbone SuperP n'est pas suffisant pour obtenir un effet sur les performances électrochimiques du matériau composite silicium/carbone. Un effet synergique est observé sur les performances électrochimiques uniquement par combinaison d'au moins trois types de carbone complémentaires, un graphite micrométrique sphérique non-poreux, un graphite micrométrique non-sphérique et un carbone nanométrique, conducteur électronique poreux.

Par ailleurs, on constate que la combinaison uniquement de deux types de carbone différents n'est pas suffisante, voire néfaste. En effet, les capacités réversibles pratiques $Q_p$ obtenues aux exemples 3 et 4 sont plus faibles que la capacité réversible pratique $Q_p$ de l'exemple 5 contenant uniquement le carbone sphérique MCMB.

La présence d'au moins trois types de carbone crée un réseau tridimensionnel améliorant la percolation électronique et la conduction électronique du matériau composite silicium/carbone.

Comme illustré à la figure 1, l'association d'au moins trois carbones différents au sein du matériau composite silicium/carbone permet de former une matrice carbonée de morphologie et de porosité particulières dans laquelle les particules ou les grains de silicium sont entourés des particules ou des grains des différents type de carbone. L'association des différents types de carbone constitue un environnement autour des particules de silicium qui favorise la conduction électronique entre les particules ou les grains de silicium.

Par ailleurs, l'interaction entre les particules de silicium et la matrice carbonée formée par les différents types de carbone conduit à la stabilisation de la phase et à une bonne tenue en cyclage.

Bien que dépourvu d'un revêtement carboné, le matériau composite silicium/carbone selon l'invention est particulièrement avantageux par rapport aux matériaux composites silicium/carbone de l'art antérieur car il peut être obtenu par un procédé simple à mettre en oeuvre et peu coûteux tout en préservant de bonnes performances électrochimiques.

## Revendications

1. Matériau composite silicium/carbone constitué par un agrégat de particules de silicium (1) et de particules de carbone dans lequel les particules de silicium (1) et les particules de carbone sont dispersées, **caractérisé en ce que** les particules de carbone sont constituées par au moins trois types de carbone différents, un premier type de carbone (2) étant choisi parmi les graphites sphériques non-poreux, un second type de carbone (3) étant choisi parmi les graphites non-sphériques et un troisième type de carbone (4) étant choisi parmi les carbones conducteurs électroniques poreux, **en ce que** les premier et second types de carbone (2, 3) ont chacun une taille moyenne de particules comprise entre $0,1\mu m$ et $100\mu m$ et **en ce que** le troisième type de carbone (4) a une taille moyenne de particules inférieure ou égale à 100nm.

2. Matériau composite selon la revendication 1, **caractérisé en ce que** le pourcentage massique de chaque type de carbone est compris entre 5% et 90%, de préférence entre 10% et 80%, par rapport à la masse totale des particules de carbone dans ledit matériau.

3. Matériau composite selon l'une des revendications 1 et 2, **caractérisé en ce que** les pourcentages massiques respectifs des différents types de carbone sont identiques.

4. Matériau composite selon l'une quelconque des revendications 1 à 3, **caractérisé en ce que** les particules de carbone sont constituées uniquement des premier, second et troisième types de carbone (2, 3 et 4).

5. Matériau composite selon l'une quelconque des revendications 1 à 4, **caractérisé en ce que** le premier type de carbone (2) est un graphite sous forme de microbilles.

6. Matériau composite selon l'une des quelconque des revendications 1 à 5, **caractérisé en ce que** le second type de carbone (3) est un graphite sous forme lamellaire.

7. Matériau composite selon l'une quelconque des revendications 1 à 6, **caractérisé en ce que** le troisième type de carbone (4) est un noir de carbone.

8. Matériau composite selon l'une quelconque des revendications 1 à 7, **caractérisé en ce que** le premier type de carbone (2) a une surface spécifique comprise entre $0,1m^2/g$ et $3m^2/g$.

9. Matériau composite selon l'une quelconque des revendications 1 à 8, **caractérisé en ce que** le second type de carbone (3) a une surface spécifique comprise entre $5m^2/g$ et $20m^2/g$.

**10.** Matériau composite selon l'une quelconque des revendications 1 à 9, **caractérisé en ce que** le troisième type de carbone (4) a une surface spécifique supérieure ou égale à 50m$^2$/g.

**11.** Matériau composite selon l'une quelconque des revendications 1 à 10, **caractérisé en ce que** les particules de silicium (1) ont une taille moyenne de particules inférieure ou égale à 1$\mu$m.

**12.** Matériau composite selon l'une quelconque des revendications 1 à 11, **caractérisé en ce que** les particules de carbone sont constituées par des particules de graphite (2) sous forme de microbilles, de graphite (3) sous forme lamellaire et de noir de carbone (4), avec un rapport massique de 1/3 : 1/3 : 1/3.

**13.** Procédé de synthèse d'un matériau composite silicium/carbone selon l'une quelconque des revendications 1 à 12, **caractérisé en ce qu'**il comporte une étape de broyage mécanique d'un mélange de particules de silicium et de particules de carbone, initialement sous forme de poudre, les particules de carbone étant constituées par au moins trois types de carbone différents, un premier type de carbone (2) choisi parmi les graphites sphériques non-poreux, un second type de carbone (3) choisi parmi les graphites non-sphériques et un troisième type de carbone (4) choisi parmi les carbones conducteurs électroniques poreux, les premier et second types de carbone (2, 3) ayant chacun une taille moyenne de particules comprise entre 0,1$\mu$m et 100$\mu$m et le troisième type de carbone (4) ayant une taille moyenne de particules inférieure ou égale à 100nm.

**14.** Procédé selon la revendication 13, **caractérisé en ce qu'**il comporte les étapes successives suivantes :

- broyage mécanique du mélange de particules de silicium et de particules de carbone, initialement sous forme de poudre et,
- post-traitement thermique à une température comprise entre 600°C et 1100°C pendant une durée comprise entre 15min et 4h.

**15.** Procédé selon l'une des revendications 13 et 14, **caractérisé en ce qu'**il est constitué par les étapes successives suivantes :

- broyage mécanique dans un solvant liquide du mélange de particules de silicium et de particules de carbone, initialement sous forme de poudre,
- séchage de manière à éliminer le solvant liquide et,
- post-traitement thermique à une température comprise entre 600°C et 1100°C pendant une durée comprise entre 15min et 4h.

**16.** Procédé selon la revendication 15, **caractérisé en ce que** le solvant liquide est choisi parmi les alcanes.

**17.** Utilisation d'un matériau composite silicium/carbone selon l'une quelconque des revendications 1 à 12, comme matériau électrochimiquement actif d'une électrode.

**18.** Utilisation selon la revendication 17, **caractérisée en ce que** l'électrode est une électrode d'un accumulateur au lithium.

**Patentansprüche**

**1.** Silizium/Kohlenstoff-Verbundwerkstoff, bestehend aus einem Aggregat aus Siliziumpartikeln (1) und Kohlenstoffpartikeln, in dem die Siliziumpartikel (1) und die Kohlenstoffpartikel verteilt sind, **dadurch gekennzeichnet, dass** die Kohlenstoffpartikel durch wenigstens drei unterschiedliche Kohlenstofftypen gebildet sind, wobei ein erster Kohlenstofftyp (2) aus den nicht porösen Kugelgraphiten ausgewählt ist, ein zweiter Kohlenstofftyp (3) aus den nicht kugeligen Graphiten ausgewählt ist und ein dritter Kohlenstofftyp (4) aus den porösen elektronisch leitenden Kohlenstoffen ausgewählt ist, dass der erste und der zweite Kohlenstofftyp (2, 3) jeweils eine mittlere Partikelgröße im Bereich zwischen 0,1 $\mu$m und 100 $\mu$m aufweisen und dass der dritte Kohlenstofftyp (4) eine mittlere Partikelgröße kleiner oder gleich 100 nm aufweist.

**2.** Verbundwerkstoff nach Anspruch 1, **dadurch gekennzeichnet, dass** der Massenprozentsatz eines jeden Kohlenstofftyps zwischen 5 % und 90 %, vorzugsweise zwischen 10 % und 80%, bezogen auf die Gesamtmasse der Kohlenstoffpartikel in dem Werkstoff beträgt.

3.  Verbundwerkstoff nach einem der Ansprüche 1 und 2, **dadurch gekennzeichnet, dass** die jeweiligen Massenprozentsätze der verschiedenen Kohlenstofftypen identisch sind.

4.  Verbundwerkstoff nach einem der Ansprüche 1 bis 3, **dadurch gekennzeichnet, dass** die Kohlenstoffpartikel einzig von den ersten, zweiten und dritten Kohlenstofftypen (2, 3 und 4) gebildet sind.

5.  Verbundwerkstoff nach einem der Ansprüche 1 bis 4, **dadurch gekennzeichnet, dass** der erste Kohlenstofftyp (2) ein Graphit in Form von Mikrokugeln ist.

6.  Verbundwerkstoff nach einem der Ansprüche 1 bis 5, **dadurch gekennzeichnet, dass** der zweite Kohlenstofftyp (3) ein Graphit in Lamellenform ist.

7.  Verbundwerkstoff nach einem der Ansprüche 1 bis 6, **dadurch gekennzeichnet, dass** der dritte Kohlenstofftyp (4) ein Ruß ist.

8.  Verbundwerkstoff nach einem der Ansprüche 1 bis 7, **dadurch gekennzeichnet, dass** der erste Kohlenstofftyp (2) eine spezifische Oberfläche im Bereich zwischen 0,1 $m^2$/g und 3 $m^2$/g aufweist.

9.  Verbundwerkstoff nach einem der Ansprüche 1 bis 8, **dadurch gekennzeichnet, dass** der zweite Kohlenstofftyp (3) eine spezifische Oberfläche im Bereich zwischen 5 $m^2$/g und 20 $m^2$/g aufweist.

10.  Verbundwerkstoff nach einem der Ansprüche 1 bis 9, **dadurch gekennzeichnet, dass** der dritte Kohlenstofftyp (4) eine spezifische Oberfläche größer oder gleich 50 $m^2$/g aufweist.

11.  Verbundwerkstoff nach einem der Ansprüche 1 bis 10, **dadurch gekennzeichnet, dass** die Siliziumpartikel (1) eine mittlere Partikelgröße kleiner oder gleich 1 $\mu$m aufweisen.

12.  Verbundwerkstoff nach einem der Ansprüche 1 bis 11, **dadurch gekennzeichnet, dass** die Kohlenstoffpartikel von Partikeln aus Graphit (2) in Form von Mikrokugeln, aus Graphit (3) in Lamellenform und aus Ruß (4), mit einem Massenverhältnis von 1/3 : 1/3 : 1/3 gebildet sind.

13.  Verfahren zur Synthese eines Silizium/Kohlenstoff-Verbundwerkstoffs nach einem der Ansprüche 1 bis 12, **dadurch gekennzeichnet, dass** es einen Schritt zum mechanischen Mahlen eines Gemischs aus Siliziumpartikeln und aus Kohlenstoffpartikeln, anfangs in Form von Pulver, umfasst, wobei die Kohlenstoffpartikel durch wenigstens drei unterschiedliche Kohlenstofftypen gebildet sind, einen ersten Kohlenstofftyp (2), der aus den nicht porösen Kugelgraphiten ausgewählt ist, einen zweiten Kohlenstofftyp (3), der aus den nicht kugeligen Graphiten ausgewählt ist, und einen dritten Kohlenstofftyp (4), der aus den porösen elektronisch leitenden Kohlenstoffen ausgewählt ist, wobei der erste und der zweite Kohlenstofftyp (2, 3) jeweils eine mittlere Partikelgröße im Bereich zwischen 0,1 $\mu$m und 100 $\mu$m aufweisen und der dritte Kohlenstofftyp (4) eine mittlere Partikelgröße kleiner oder gleich 100 nm aufweist.

14.  Verfahren nach Anspruch 13, **dadurch gekennzeichnet, dass** es die folgenden aufeinanderfolgenden Schritte umfasst:

     - mechanisches Mahlen des Gemischs aus Siliziumpartikeln und aus Kohlenstoffpartikeln, anfangs in Form von Pulver, und
     - Wärmenachbehandlung bei einer Temperatur im Bereich zwischen 600 °C und 1100 °C über eine Dauer im Bereich zwischen 15 Min. und 4 Std.

15.  Verfahren nach einem der Ansprüche 13 und 14, **dadurch gekennzeichnet, dass** es durch die folgenden aufeinanderfolgenden Schritte gebildet ist:

     - mechanisches Mahlen des Gemischs aus Siliziumpartikeln und aus Kohlenstoffpartikeln, anfangs in Form von Pulver, in einem flüssigen Lösungsmittel,
     - Trocknen, um das flüssige Lösungsmittel zu entfernen, und
     - Wärmenachbehandlung bei einer Temperatur im Bereich zwischen 600 °C und 1100 °C über eine Dauer im Bereich zwischen 15 Min. und 4 Std.

16.  Verfahren nach Anspruch 15, **dadurch gekennzeichnet, dass** das flüssige Lösungsmittel aus den Alkanen ausgewählt ist.

**17.** Verwendung eines Silizium/Kohlenstoff-Verbundwerkstoffs nach einem der Ansprüche 1 bis 12, als elektrochemisch aktives Material einer Elektrode.

**18.** Verwendung nach Anspruch 17, **dadurch gekennzeichnet, dass** die Elektrode eine Elektrode eines Lithium-Akkumulators ist.

**Claims**

**1.** Silicon/carbon composite material formed of an aggregate of silicon particles (1) and of carbon particles in which the silicon particles (1) and the carbon particles are dispersed, **characterized in that** the carbon particles are formed of at least three different types of carbons, a first carbon type (2) being selected from among non-porous spherical graphites, a second carbon type (3) being selected from among non-spherical graphites and a third carbon type (4) being selected from among porous electronically-conductive carbons, and **in that** the first and second carbon types (2, 3) each have a mean particle size ranging between 0.1 $\mu$m and 100 $\mu$m and **in that** the third carbon type (4) has a mean particle size smaller than or equal to 100 nm.

**2.** Composite material according to claim 1, **characterized in that** the mass percentage of each carbon type ranges between 5% and 90%, preferably between 10% and 80%, of the total carbon particle mass in said material.

**3.** Composite material according to any of claims 1 and 2, **characterized in that** the respective mass percentages of the different carbon types are identical.

**4.** Composite material according to any of claims 1 to 3, **characterized in that** the carbon particles are only formed of the first, second, and third carbon types (2, 3, and 4).

**5.** Composite material according to any of claims 1 to 4, **characterized in that** the first carbon type (2) is a graphite in the form of microbeads.

**6.** Composite material according to any of claims 1 to 5, **characterized in that** the second carbon type (3) is a graphite in lamellar form.

**7.** Composite material according to any of claims 1 to 6, **characterized in that** the third carbon type (4) is a carbon black.

**8.** Composite material according to any of claims 1 to 7, **characterized in that** the first carbon type (2) has a specific surface area ranging between 0.1 m$^2$/g and 3 m$^2$/g.

**9.** Composite material according to any of claims 1 to 8, **characterized in that** the second carbon type (3) has a specific surface area ranging between 5 m$^2$/g and 20 m$^2$/g.

**10.** Composite material according to any of claims 1 to 9, **characterized in that** the third carbon type (4) has a specific surface area greater than or equal to 50 m$^2$/g.

**11.** Composite material according to any of claims 1 to 10, **characterized in that** the silicon particles (1) have a mean particle size smaller than or equal to 1 $\mu$m.

**12.** Composite material according to any of claims 1 to 11, **characterized in that** the carbon particles are formed by graphite particles (2) in the form of microbeads, of graphite (3) in lamellar form, and of carbon black (4), with a mass ratio of 1/3 : 1/3 : 1/3.

**13.** Method of synthesis of a silicon/carbon composite material according to any of claims 1 to 12, **characterized in that** it comprises a step of mechanical milling of a mixture of silicon particles and of carbon particles, initially in the form of a powder, the carbon particles being formed of at least three different carbon types, a first carbon type (2) selected from among non-porous spherical graphites, a second carbon type (3) selected from among non-spherical graphites, and a third carbon type (4) selected from among porous electronically-conductive carbons, the first and second carbon types (2, 3) each having a mean particle size ranging between 0.1 $\mu$m and 100 $\mu$m and the third

carbon type (4) having a mean particle size smaller than or equal to 100 nm.

14. Method according to claim 13, **characterized in that** it comprises the successive steps of:

  - mechanical milling of the mixture of silicon particles and of carbon particles, initially in the form of a powder, and
  - thermal post-processing at a temperature ranging between 600°C and 1100°C for a time period ranging between 15 min and 4h.

15. Method according to any of claims 13 and 14, **characterized in that** it is comprised of the successive steps of:

  - mechanical milling in a liquid solvent of the mixture of silicon particles and of carbon particles, initially in the form of a powder,
  - drying to remove the liquid solvent, and
  - thermal post-processing at a temperature ranging between 600°C and 1100°C for a time period ranging between 15 min and 4h.

16. Method according to claim 15, **characterized in that** the liquid solvent is selected from among alkanes.

17. Use of a silicon/carbon composite material according to any of claims 1 to 12, as an electrochemically active electrode material.

18. Use according to claim 17, **characterized in that** the electrode is a lithium accumulator electrode.

Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1205989 A

- CN 1913200 A